# Europäisches Patentamt

# European Patent Office

# Office européen des brevets

(19)

(11) Veröffentlichungsnummer **0 033 371**
**B1**

(12)

# EUROPÄISCHE PATENTSCHRIFT

(45) Veröffentlichungstag der Patentschrift:
**19.09.84**

(51) Int. Cl.³: **B 01 D 33/00,** B 01 D 35/00,
B 01 D 37/00

(21) Anmeldenummer: **80107258.8**

(22) Anmeldetag: **21.11.80**

(54) **Anordnung zur Filtration.**

(30) Priorität: **23.11.79 DE 2947329**

(43) Veröffentlichungstag der Anmeldung:
**12.08.81 Patentblatt 81/32**

(45) Bekanntmachung des Hinweises auf die Patenterteilung:
**19.09.84 Patentblatt 84/38**

(84) Benannte Vertragsstaaten:
**AT BE CH FR GB IT LI LU NL SE**

(56) Entgegenhaltungen:
**DE - A - 1 536 890**
**DE - A - 1 658 063**
**DE - A - 2 422 208**
**DE - U - 7 245 246**
**US - A - 1 762 560**

(73) Patentinhaber: **Stahl, Werner, Dr., Stalbühlweg 8,**
**D-6740 Landau (DE)**

(72) Erfinder: **Stahl, Werner, Dr., Stalbühlweg 8,**
**D-6740 Landau (DE)**

(74) Vertreter: **Weber, Otto Ernst, Dipl.-Phys.,**
**Hofbrunnstrasse 47, D-8000 München 71 (DE)**

## Beschreibung

Die Erfindung betrifft eine Anordnung zur Filtration mit einer kontinuierlich unter Unterdruck und Überdruck arbeitenden Filtervorrichtung, die eine als Filtermaterial dienende poröse Materialschicht, insbesondere ein Filtertuch, zur Abscheidung von Feststoffteilchen von einer Flüssigkeit aufweist.

Bei einer nicht als Vakuumfilter ausgebildeten Anordnung gemäß der DE-C-878 795 ist nachteilig, daß sie nicht allein unter Vakuum betrieben werden kann. Außerdem ist ein Begehen durch das Bedienungs- und Wartungspersonal nicht möglich, weil diese Anordnung nicht in einem begehbaren Überdruckraum untergebracht ist.

Durch die DE-U-7 245 246 ist eine in einem begehbaren Überdruckraum angeordnete Filterzentrifuge zum Trennen von Suspensionen bekanntgeworden. Diese Filterzentrifuge dient zur Lösung der Aufgabe, den Saugvorgang während des Betriebes auf einfache Weise durch Selbstreinigung zu ermöglichen und die Filtrationsmethode auf Filtrationsflüssigkeiten mit einem hohen Dampfdruck anzuwenden.

Allgemein bekannt ist, daß bei der Vakuumfiltration die erreichbare Restfeuchte von der Differenz zwischen dem atmosphärischen Druck und dem jeweiligen Dampfdruck derjenigen Flüssigkeit abhängt, aus welcher die Feststoffe ausgeschieden werden sollen. Auch kann durch eine Verlängerung der Saugzeit bei maximaler Druckdifferenz nur noch eine so geringe Verminderung der Restfeuchte erzielt werden, daß die dafür erforderliche Energie unwirtschaftlich hoch ist, weil die durchströmende Luft mit Hilfe von Vakuumpumpen fortwährend abgesaugt werden muß.

Da außerdem die Durchsatzleistung mit einer ansteigenden Saugzeit abfällt, wäre eine sehr aufwendige gerätetechnische Einrichtung erforderlich, um Vakuumfilter mit sehr großen Saugzeiten zu betreiben.

Der Erfindung liegt daher die Aufgabe zugrunde, eine Anordnung zur Filtration der eingangs genannten Art zu schaffen, mit welcher ohne den für eine Druckfiltration oder eine kombinierte Druck-Vakuum-Filtration erforderlichen gerätetechnischen Aufwand eine besonders geringe Restfeuchte erreichbar ist.

Zur Lösung dieser Aufgabe sieht die Erfindung vor, daß die Filtervorrichtung eine Vakuum-Filtervorrichtung ist und daß die gesamte Vakuum-Filtervorrichtung einschließlich der vorhandenen Lagerung, Antriebe, Steuerungen und dergleichen in einem für das Bedienungs- und Wartungspersonal begehbaren, gegenüber der freien Atmosphäre unter Überdruck stehenden, abgeschlossenen Überdruckraum angeordnet ist.

Durch die Erfindung ist es möglich, mit einer erstaunlichen geringen gerätetechnischen Aufwand die Restfeuchte in überraschender Weise abzusenken, wie dies bisher nicht möglich war. Mit dieser Anordnung werden auch bei der Erzgewinnung in hohen Lagen oder Untertage auftretende Probleme bezüglich der Restfeuchte des Filterkuchens gelöst. Hierbei sowie bei der Kohlegewinnung und bei der Verarbeitung solcher Rohstoffe ergibt sich der weitere wirtschaftliche Vorteil, daß der Filtervorgang an der Abbaustelle durchgeführt werden kann, so daß der Aufwand entfällt, große Stoffmengen unter Umständen über beachtliche Höhen, z. B. an die Erdoberfläche, pumpen zu müssen, von denen ein großer Teil oft anschließend wieder nach unten geführt werden muß. Somit kann beispielsweise bei der Erzgewinnung, insbesondere bei der Gewinnung von Edelmetallen, ein großer Teil des Aufbereitungsvorganges Untertage an Ort und Stelle durchgeführt werden. Weiter läßt sich die Erfindung auch beispielsweise bei der Papierherstellung bzw. bei der Aufbereitung von Ausgangsmaterialien mit großen Vorteil verwenden. Während bisher weitgehend Filtereinrichtungen verwendet wurden, an die ein Fallrohrsystem oder ein sogenannter barometrischer Fuß angeschlossen war, können nur unter starker Vereinfachung des gerätetechnischen Aufwandes bei solchen Anlagen auftretende Probleme weitgehend überwunden werden.

Als störend erwies sich auch, daß die Trockensaugluft mit dem Filter abgeführt wird und dadurch das scheinbare spizifische Gewicht des Filtrats wegen mitgerissener und eingeschlossener Luft vermindert wurde. Deshalb wurde auch der ausnutzbare Unterdruck bei solchen Anlagen oft auf wenige Meter Wassersäule vermindert. Unter Anwendung der erfindungsgemäßen Anordnung können hingegen die Trocknungsluft und das Filtrat getrennt abgeführt und aufgefangen werden.

Während bei den bekannten Anlagen die Dimensionierung des Fallrohres problematisch war, weil eine Abhängigkeit von den Filtereigenschaften des Faservlieses besteht, können gemäß der Erfindung entsprechend groß dimensionierte und damit verlustarme Filtrat- und Luftabführrohre verwendet werden. Außerdem kann die Aufstellung auf einem beliebigen Niveau erfolgen, weil die bei der klassischen Anordnung erforderliche Aufstellung in einer verhältnismäßig großen Höhe über dem Boden nicht mehr erforderlich ist. Die bisher vorhandenen Probleme bei der erhöhten Aufstellung entfallen nun, weil kein Fallrohr als barometrischer Fuß verwendet werden muß.

Die Erfindung wird nachfolgend beispielsweise anhand der Zeichnung beschrieben; in dieser zeigt

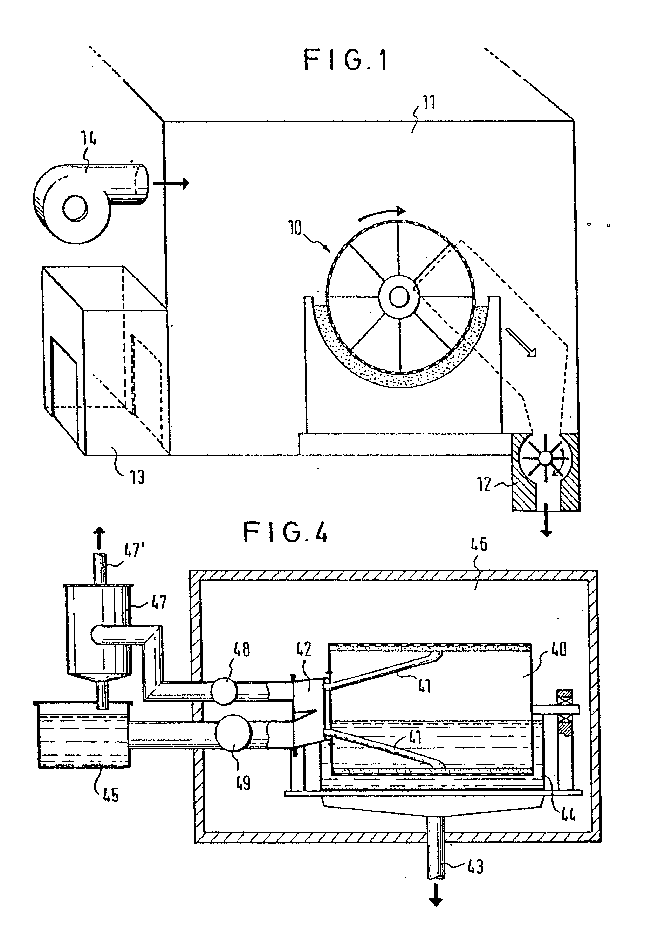

Fig. 1 eine schematische Darstellung einer erfindungsgemäßen Filtrationsanordnung mit einem begehbaren Überdruckraum und verschiedenen Zusatzeinrichtungen,

Fig. 2 eine bevorzugte Ausführungsform des Erfindungsgegenstandes bei welcher in einem Stollen ein Bandfilter verwendet wird,

Fig. 3 zum Vergleich eine herkömmliche Filteranordnung mit einem Fallrohr und

Fig. 4 eine schematische Darstellung einer erfindungsgemäßen Filteranordnung für den gleichen Anwendungszweck wie die in der Fig. 3 veranschaulichte herkömmliche Einrichtung.

Gemäß der Darstellung in der Zeichnung ist ein für Bedienungs- und Wartungspersonal begehbarer Überdruckraum 11 vorhanden, in welchem ein Vakuumfilter 10 angeordnet ist. Das Vakuumfilter 10 ist rein schematisch in Form eines Scheibenfilters veranschaulicht. Grundsätzlich kann auch ein anderes Drehfilter oder im Prinzip jede Art eines Vakuumfilters verwendet werden.

Die Zuführung der Trübe kann in der üblichen Weise erfolgen und ist deshalb in der Zeichnung nicht im einzelnen dargestellt. Auch die weiteren gerätetechnischen Einzelheiten des Vakuumfilters 10 bedürfen keiner weiteren Veranschaulichung oder Erläuterung, da alle dem Fachmann geläufigen Konstruktionen für die Verwendung bei der erfindungsgemäßen Anordnung geeignet sind.

Eine Schleuseneinrichtung 12, die in der Zeichnung als Zellenradschleuse schematisch dargestellt ist, dient dazu, den von dem Scheibenfilter abgehobenen Feststoff aus dem Überdruckraum 11 in der durch Pfeile dargestellten Richtung in die freie Atmosphäre auszutragen. Es könnte anstatt einer Zellenradschleuse natürlich auch eine Förderschnecke oder eine andere entsprechende Einrichtung verwendet werden.

Der Überdruckraum 11 kann durch eine Schleusenkammer 13 vom Bedienungs- und/oder Wartungspersonal betreten und verlassen werden. Eine (nicht dargestellte) Druckausgleichseinrichtung ist zweckmäßigerweise in der Schleusenkammer 13 vorgesehen.

Um den gewünschten Überdruck in dem Überdruckraum 11 zu erzeugen, ist ein Luftkompressor 14 vorgesehen, der in der Zeichnung ebenfalls nur rein schematisch veranschaulicht ist. Gemäß der Darstellung wird in der durch einen Pfeil veranschaulichten Richtung Druckluft durch den Luftkompressor 14 in den Überdruckraum 11 eingeblasen, bis der für den jeweiligen Anwendungsfall gewünschte Überdruck erreicht ist. Natürlich müssen durch den Luftkompressor 14 auch Druckverluste ausgeglichen werden, die im Bereich der Schleuseneinrichtung 12 beim Austragen des Feststoffs und bei der Benutzung der Schleusenkammer 13 auftreten.

Bei manchen Anwendungsfällen kann es zweckmäßig sein, den Überdruckraum 11 in Form eines Gebäudes auszubilden, dessen Wände aus Stahlbeton bestehen. Insbesondere bei großtechnischen Anwendungsfällen wie der Verarbeitung von Erz oder Kohle usw. erweist sich die erfindungsgemäße Anordnung entsprechend der Darstellung in der Zeichnung als besonders vorteilhaft, weil dabei die gemäß der Erfindung ermöglichten gerätetechnischen Einsparungen außerordentlich hoch sein können.

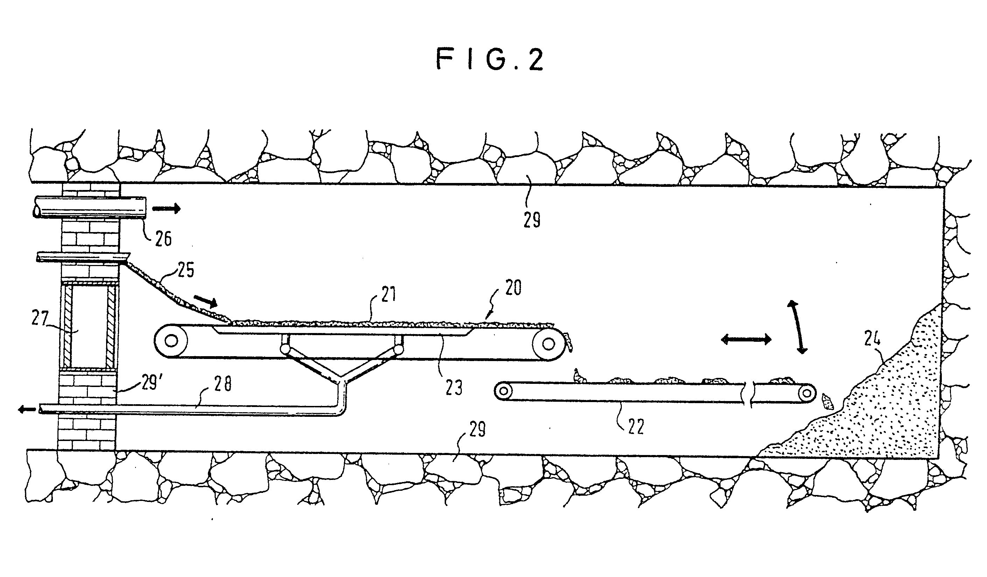

Die Fig. 2 veranschaulicht einen Anwendungsfall des Erfindungsgegenstandes, bei welchem ein Bandfilter 20 zwischen den mit 29 bezeichneten Schichten aus Gestein in einem unterirdischen Stollen angeordnet ist. Durch eine zwischen den Schichten des Gesteins 29 eingezogenen druckfesten Mauer 29' wird ein in sich geschlossener Druckraum gebildet, der leicht durch eine Druckluftzufuhr 26 auf einen vorgegebenen oder gewünschten Überdruck gebracht werden kann. In der druckfesten Mauer 29' ist vorzugsweise eine Doppelschleuse 27 vorgesehen. Durch die druckfeste Mauer 29' wird nicht nur die Druckluft in den Druckraum eingeblasen, sondern es wird auch die Suspensionsaufgabe 25 durch diese Mauer hindurchgeführt, um die Suspension auf das Bandfilter 20 aufzugeben. Der dort gebildete Filterkuchen 21 wird gemäß der Darstellung in der Fig. 2 im rechten Teil des Bandfilters 20 von dem Filterband abgeworfen und gelangt auf ein Transportband 22, welches vorzugsweise sowohl in seitlicher Richtung als auch in seiner Neigung verstellbar angeordnet ist. Von dem Transportband 22 werden die Feststoffe zu einer Aufschüttung 24 gemäß der Darstellung im rechten Teil der Fig. 2 angeordnet.

Von einem Filtratsammelkasten 23, der unterhalb des Filterbandes angeordnet ist, werden Luft und Filtrat durch eine Luft- und Filtratabführung 28 von dem Bandfilter 20 durch die druckfeste Mauer 29' hindurch abgeleitet.

Mit einer in der Fig. 2 dargestellten Anordnung lassen sich verhältnismäßig große Mengen an Ausgangsmaterial ohne den Transport an die Erdoberfläche und zurück an Ort und Stelle verarbeiten, so daß nur noch ein fast vernachlässigbarer Teil an Materialmengen an die Erdoberfläche zu transportieren ist, und zwar der von Abraum bereits befreite Anteil des Ausgangsmaterials, der mit einem Edelmetall oder dergleichen bereits stark angereichert ist.

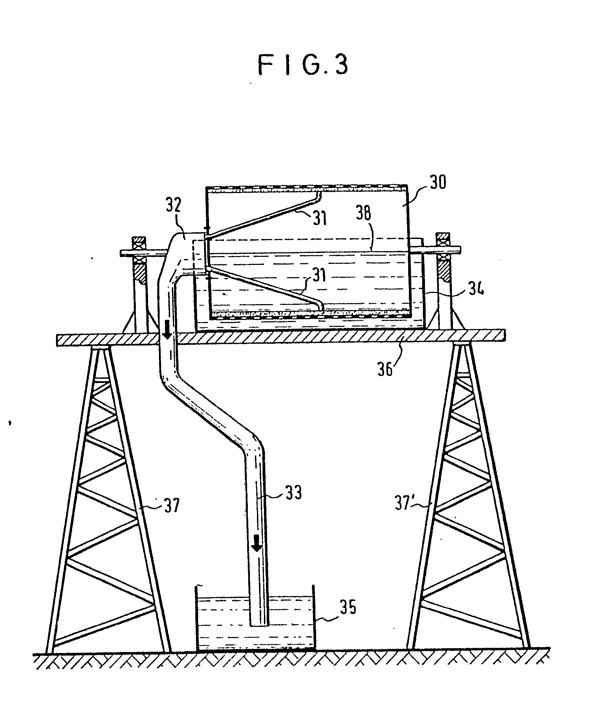

Um die gemäß der Erfindung erreichbaren Vorteile zu veranschaulichen, ist als Vergleichsanordnung in der Fig. 3 eine herkömmliche Filteranlage dargestellt, bei welcher auf Stützen 37 und 37' in einer beträchtlichen Höhe über dem Boden eine Plattform 36 gelagert ist, auf welcher ein Vakuumfilter 30 steht. Die erhöhte Aufstellung des Vakuumfilters 30 ist deshalb erforderlich, weil Filtratrohre 31 über einen Steuerkopf 32 und insbesondere über ein Fallrohr 33 in ein Filtratsammelbecken 35 geführt sind. Das Fallrohr 33, welches auch als barometrischer Fuß zu bezeichnen ist, dient zur Erzeugung eines entsprechenden Unterdrucks in den Filtratrohren 31 des Vakuumfilters 30. Der Flüssigkeitsspegel im Filtertrog 34 ist in der Darstellung nach der Fig. 3 mit 38 bezeichnet.

Es dürfte einleuchtend sein, daß die erhöhte Aufstellung des Vakummfilters 30 eine Vielzahl von konstruktiven Problemen aufwirft. Außerdem haben sich gemäß den obigen Erläuterungen mit solchen Anlagen beim Anfahren des Filters erhebliche Probleme ergeben. Weiterhin ist die Dimensionierung des Fallrohres problematisch, da eine Abhängigkeit von den Filtereigenschaften des Faservlieses besteht. Da auch die Trockensaugluft mit dem Filtrat abgeführt wird, sinkt das scheinbare spezifische Gewicht des Filtrats wegen der im Filtrat eingeschlossenen und mitgerissenen Luft. Dadurch muß zwangsläufig der praktisch ausnutzbare Unterdruck verringert werden.

Schließlich ist grundsätzlich der überhaupt erreichbare Unterdruck zur Kuchenbildung bei einer derartigen Anordnung durch den Dampfdruck absolut begrenzt.

Die erheblichen Nachteile der anhand der Fig. 3 beschriebenen Anlage, von denen einige wesentliche oben genannt sind, lassen sich mit einer in der Fig. 4 schematisch dargestellten erfindungsgemäßen Filteranordnung praktisch vollständig beseitigen.

Nach der Fig. 4 ist in einem Überdruckraum die gesamte Konstruktion eines seiner Art nach als Vakuumfilter ausgebildeten Filters angeordnet, welches in seiner Gesamtheit mit 40 bezeichnet ist. Der schematisch dargestellte Überdruckraum ist mit 46 bezeichnet. Filtratrohre 41 sind über einen Steuerkopf 42 an zwei Ausgangsleitungen angeschlossen. Über ein Regelventil 48 für Luft ist eine Ausgangsleitung an einen außerhalb des Überdruckraums 46 angeordneten Gaszyklon 47 angeschlossen, der einen Luftaustritt 47' aufweist. Eine weitere Ausgangsleitung, in welcher ein Regelventil 49 für Filtrat vorgesehen ist, ist an ein ebenfalls außerhalb des Überdruckraumes 46 aufgestelltes Filtratsammelbecken 45 angeschlossen.

Die Feststoffe können durch einen Filtratauslaß 43 aus dem Überdruckraum 46 abgeführt werden. Ein Filtertrog 44 ist in der Fig. 4 ebenso wie die anderen Bauteile rein schematisch dargestellt.

Der Überdruck zur Kuchenbildung auf dem Vakuumfilter 40 läßt sich nach der in der Fig. 4 schematisch dargestellten erfindungsgemäßen Anordnung durch eine (nicht dargestellte) zu Luftzufuhr in gewünschter Weise einstellen und ist weder zur Kuchenbildung noch zur Trockensaugung begrenzt. Die Trockensaugluft und das Filtrat können vorteilhafterweise getrennt abgeführt und aufgefangen werden, wie es oben bereits erläutert wurde.

Die Druckdifferenzen werden voneinander völlig unabhängig eingestellt.

Es dürfte aus der Darstellung in der Fig. 4 ohne weiteres ersichtlich sein, daß die Ausstellung der gesamten Anordnung auf jedem beliebigen Niveau möglich ist, wie es den jeweiligen Anwendungserfordernissen am besten entspricht.

Es können auch ohne praktische Beschränkungen entsprechend weit dimensionierte und damit verlustarme Filtrat- und Luftabführrohre bei der erfindungsgemäßen Anordnung verwendet werden.

Natürlich bestehen auch bei der erfindungsgemäßen Anordnung nach der Fig. 4 keinerlei Schwierigkeiten beim Anfahren des Filters, wie es bei der herkömmlichen Anordnung nach der Fig. 3 jedoch der Fall ist, da zunächst die Flüssigkeitssäule im Fallrohr vollständig aufgebaut sein muß, bevor die gewünschte Funktion erreicht werden kann. Durch Lufteinschlüsse oder andere Störungen kann es jedoch bei einer solchen Anordnung leicht zum Abreißen der Flüssigkeitssäule führen, so daß der angestrebte Absaugeffekt damit aufgehoben ist.

Bei einem Zellstoff-Filter, wie es in der Fig. 4 als Beispiel des Erfindungsgegenstandes schematisch dargestellt ist, besteht nicht nur der Vorteil, daß der Luftdurchsatz und der Filtratdurchsatz weitgehend unabhängig voneinander werden können, es kann vielmehr auch zusätzliche Luft mit beliebigem Druck durch die Filteranordnung hindurchgeblasen werden. Außerdem läßt sich bei einer solchen Anordnung der Feststoff gemäß der Erfindung auch besonders leicht auswaschen.

Grundsätzlich eignet sich die Erfindung auch dazu, bei einem beispielsweise als Drehfilter ausgebildeten Vakuumfilter nur eine bestimmte Zone mit dem angestrebten Überdruck zu fahren, beispielsweise die Naßzone, so daß eine besonders starke Kuchenbildung erreicht werden kann. Es könnte auch in einer alternativen Ausführungsform die Trockensaugzone mit dem gewünschten Überdruck beaufschlagt werden, so daß eine besonders geringe Restfeuchte bei entsprechend geringer Kuchenbildung gewährleistet wird. Es könnte bei solchen Anordnungen der gemäß der Erfindung erzielte Effekt nur in Teilbereichen ausgenutzt werden.

## Patentansprüche

1. Anordnung zur Filtration mit einer kontinuierlich unter Unterdruck und Überdruck arbeitenden Filtervorrichtung, die eine als Filtermaterial dienende poröse Materialschicht, insbesondere ein Filtertuch, zur Abscheidung von Feststoffteilchen von einer Flüssigkeit aufweist, dadurch gekennzeichnet, daß die Filtervorrichtung eine Vakuum-Filtervorrichtung (10, 20, 40) ist und daß die gesamte Vakuum-Filtervorrichtung (10, 20, 40) einschließlich der vorhandenen Lagerung, Antriebe, Steuerungen und dergleichen in einem für das Bedienungs- und Wartungspersonal begehbaren, gegenüber der freien Atmosphäre unter Überdruck stehenden, abgeschlossenen Überdruckraum (11) angeordnet ist.

2. Anordnung nach Anspruch 1, dadurch gekennzeichnet, daß der Überdruckraum (11) über eine Schleuseneinrichtung (12) mit einem Austragraum, der auf insbesondere einem höheren oder niedrigeren als dem atmosphärischen Druck gehalten ist, verbunden ist, in welchen der Filterkuchen aus dem Überdruckraum (11) ausgetragen wird.

3. Anordnung nach Anspruch 2, dadurch gekennzeichnet, daß der Differenzdruck zwischen dem Überdruckraum (11) und dem Austragraum im Bereich von 1 bis 2 bar, insbesondere von 1,5 bis 1,8 bar, liegt.

4. Anordnung nach einem der Ansprüche 1 bis 3, dadurch gekennzeichnet, daß der Überdruckraum (11) zur freien Atmosphäre hin eine für Bedienungs- und Wartungspersonal auch während des Betriebs der Vakuum-Filtervorrichtung (10) benutzbare Schleusenkammer (13) mit einer Druckausgleichseinrichtung aufweist.

5. Anordnung nach einem der Ansprüche 1 bis 4, dadurch gekennzeichnet, daß der Überdruckraum (11) und der Austragraum in einem im Erdreich befindlichen Stollen angeordnet sind und daß die Druckdifferenz zwischen beiden Räumen einstellbar ist.

6. Anordnung nach einem der vorhergehenden Ansprüche, dadurch gekennzeichnet, daß die Vakuum-Filtervorrichtung als Bandfilter ausgebildet ist.

**Claims**

1. A filtering apparatus having a filtering device operating under gage pressure and vacuum, comprising a layer of filtering material e. g. a filter cloth for extracting solid particles from liquids, characterized in that the filtering device is a vacuum-filtering device (10, 20, 40), and in that the whole vacuum-filtering device (10, 20, 40) including the bearings, the driving system, the controls and the like is placed in a gage pressure space (11) to which the operators have access, which is under gage pressure and which is shut off from the outside atmosphere.

2. A filtering apparatus as claimed in claim 1, characterized in that the gage pressure space (11) is connected to an outlet space by means of an air lock (12), the outlet space being kept at an e. g. higher or lower pressure than the atmospheric pressure to which the filter cake is transfered from the gage pressure space (11).

3. A filtering apparatus as claimed in claim 2, characterized in that the pressure difference between the gage pressure space (11) and the outlet space is kept at 1—2 bar, e. g. of 1,5—1,8 bar.

4. A filtering apparatus as claimed in one of the claims 1—3, characterized in that the gage pressure space (11) has an air lock space (13) with a pressure equalizing system, to which the operators have access from the free atmosphere also during operation of the vacuum-filtering device (10).

5. A filtering apparatus as claimed in one of the claims 1—4, characterized in that the gage pressure space (11) and the outlet space are placed in an underground tunnel, and that the pressure difference between the two spaces is adjustable.

6. A filtering apparatus as claimed in one of the claims 1—5, characterized in that the vacuum-filtering device is a belt filter unit.

**Revendications**

1. Ensemble de filtration avec un dispositif filtrant fonctionnant en continu sous dépression et surpression et qui comporte une couche de matériau poreux servant de matériau filtrant, notamment un tissu filtrant, pour séparer d'un liquide des particules de matières solides, ensemble caractérisé en ce que le dispositif filtrant est un dispositif filtrant sous vide (10, 20, 40) et que l'ensemble de ce dispositif filtrant sous vide (10, 20, 40) y compris l'implantation, les entraînements, les commandes, etc., existants, est disposé dans un local en surpression (11), fermé, accessible au personnel de conduite et au personnel d'entretien, et étant en surpression par rapport à l'atmosphère libre.

2. Ensemble selon la revendication 1, caractérisé en ce que le local en surpression (11) est relié par l'intermédiaire d'un dispositif de sas (12) avec un local d'évacuation, qui est maintenu à une pression notamment plus haute ou plus basse que la pression atmosphérique, et dans lequel le tourteau de filtration est évacué du local en surpression (11).

3. Ensemble selon la revendication 2, caractérisé en ce que la pression différentielle entre le local en surpression (11) et le local d'évacuation, se situe entre 1 et 2 bars, notamment entre 1,5 et 1,8 bar.

4. Ensemble selon une des revendications 1 à 3, caractérisé en ce que le local en surpression (11) comporte vers l'atmosphère libre, une chambre de sas (13) avec un dispositif d'égalisation de la pression, utilisable par le personnel de conduite et le personnel d'entretien, même pendant le fonctionnement du dispositif filtrant sous vide (10).

5. Ensemble selon une des revendications 1 à 4, caractérisé en ce que le local en surpression (11) et le local d'évacuation, sont disposés dans une galerie se trouvant dans le sol et que la différence de pression entre les deux locaux est réglable.

6. Ensemble selon une des revendications 1 à 5, caractérisé en ce que le dispositif filtrant sous vide est un filtre à bande.

# FIG.1

# FIG.4

0 033 371

# F I G . 3